# EUROPÄISCHE PATENTSCHRIFT

(11) **EP 1 075 393 B1**
(45) Veröffentlichungstag und Bekanntmachung des Hinweises auf die Patenterteilung: **02.07.2003**
(21) Anmeldenummer: 00912489.2
(22) Anmeldetag: 19.02.2000
(51) Int. Cl.: B44C 5/04, B32B 1/10, B29C 63/04, B29C 63/16

(54) **VERFAHREN ZUR HERSTLLUNG EINES VERKLEIDUNGSTEILS AUS BRUCHGEFÄHRDETEM MATERIAL**
METHOD FOR PRODUCING A COVERING ELEMENT MADE OF BREAKABLE MATERIAL
PROCEDE DE FABRICATION D'UN ELEMENT DE REVETEMENT A L'AIDE DE MATIERE SUJETTE A LA RUPTURE

(30) Priorität: 08.03.1999 DE 19909869
(43) Veröffentlichungstag der Anmeldung: 14.02.2001
(73) Patentinhaber: DaimlerChrysler AG, 70567 Stuttgart (DE)
(72) Erfinder: BENZING, Thomas, D-72218 Wildberg (DE); JAMBOR, Arno, D-71665 Vaihingen (DE); SKRZYPEK, Uwe, D-47798 Krefeld (DE)
(86) Internationale Anmeldenummer: EP0001379
(87) Internationale Veröffentlichungsnummer: WO00053434

(56) Entgegenhaltungen:
- EP-A- 0 586 360
- DE-A- 1 948 663
- FR-A- 2 721 549
- GB-A- 2 305 148

## Beschreibung

Die Erfindung betrifft ein Verfahren zur Herstellung eines Verkleidungsteils nach der in den Oberbegriffen von Anspruch 1, 8 und 10 näher definierten Art.

Aus der DE 296 04 026 U1 ist ein Gebrauchsgegenstand mit im wesentlichsten flächenhafter Erstreckung und einer Front- oder Abdeckschicht aus einem spröden, in dünner Schicht bruchgefährdetem, natürlichen, insbesondere aus einem Stein oder steinartigen Werkstoff beschrieben. Dabei ist die Front- oder Abdeckschicht auf einer Trägerschicht aus einem faserverstärkten Werkstoff mit einer Kunststoffmatrix angeordnet. Der Gebrauchsgegenstand ist als Verkleidungsteil für Dekorationszwecke jedoch nur eingeschränkt einsetzbar, da er durch seine im wesentlichen flächenhafte Erstrekkung den Einsatz für in ihrer Fläche dreidimensional gekrümmte Verkleidungsteile nicht ermöglicht.

In der DE 297 12 329 U1 ist ein dreidimensional gekrümmtes Formteil aus Verbundmaterial beschrieben, in welchem die Dekorelemente aus Fasern oder einer Fasermatte bestehen. Die Formgebung des in drei Raumrichtungen gekrümmten Teiles werden durch ein durch Tiefziehen hergestelltes Formteil vorgegeben. Bei diesem Verfahren ist jedoch der Einsatz eines spröden, in dünner Schicht bruchgefährdeten Materials nicht möglich.

Auch die DE 39 30 603 A1 zeigt ein Verkleidungsteil bzw. ein Verfahren zu dessen Herstellung, wobei das Verkleidungsteil eine in drei Raumrichtungen gekrümmte Oberflächenform aufweist. Dabei wird die endgültige Form durch zwei der Formgebung dienende Werkstückformen, einer Oberform und einer Unterform, durch Einlegen und Aushärten in diesen Formen hergestellt. Als dekorative Einlagen lassen sich damit nur biegeweiche Materialien verwenden. Der Einsatz eines spröden, in dünner Schicht bruchgefährdeten Materials, wie z.B. Naturstein, ist aufgrund der zur Formgebung erforderlichen Durchbiegung des Materials der dekorativen Einlage nicht möglich.

Aus der DE 39 40 102 A1 sind leichtgewichtige Verbundplatten zum Herstellen von Einrichtungsgegenständen und Raumausstattungselementen mit Oberflächen aus Naturstein bekannt. Die dort beschriebenen leichtgewichtigen Verbundplatten werden ausschließlich an den vorbestimmten Verwendungszwecken orientiert hergestellt. Die dort beschriebene Erfindung betrifft damit den variablen vibrations- und torsionsfesten Aufbau der Vebundplatten je nach Anwendungsbereich, sowie deren Verbindungsmöglichkeiten zu räumlichen Körpern und deren Oberflächengestaltung. Besondere Ausgestaltungen des Verfahrens betreffen die Gestaltung von Oberflächenintarsien, Bohrungen und Profilen.

Die DE 41 12 607 A1 beschreibt ein Verfahren und eine Vorrichtung zur Beschichtung von profilierten Oberflächen plattenförmiger Werkstücke. Das dort genannte Verfahren dient zur Beschichtung einer profilierten Oberfläche eines plattenförmigen Werkstücks mit einem flexiblen, flächigen Beschichtungsmaterials, wie beispielsweise einem Furnier, einem Dekorpapier oder dergleichen. Das Verfahren umfaßt dabei die folgenden Schritte: Auflegen des Werkstücks auf eine Preßplatte, wobei sich über dem Werkstück das Beschichtungsmaterial und an dem Werkstück und/oder dem Beschichtungsmaterial eine Leimschicht befindet; Absenken einer unbeheizten Formmembran auf das Beschichtungsmaterial; Evakuieren des Raums zwischen der Formmembran und der unteren Preßplatte; Absenken einer beheizten, elastisch dehnbaren Preßmembran auf die Formmembran und Beaufschlagen der Preßmembran mit Druck.

In der nicht vorveröffentlichten DE 198 22 425.7 ist ein gattungsgemäßes Verkleidungsteil für Dekorationszwecke, insbesondere im Innenbereich und hier bevorzugt für die Innenverkleidung von Fahrgasträumen von Fahrzeugen, beschrieben, bei dem auf der Sichtseite eines Basisteiles eine dekorative Deckschicht aus einem Naturstoff, hier insbesondere Naturstein, aufgebracht ist. Die dekorative Natursteinschicht läßt sich bei diesem Verfahren in beliebiger dreidimensionaler Form realisieren. Dazu wird unter hohem Materialeinsatz des Naturstoffes die gewünschte, endgültige Oberflächenform durch Fräsen aus einem Vollmaterial hergestellt. Die gefräste Schicht wird dabei auf einem Trägerelement gehalten, auf welchem sie im späteren Einsatz verbleibt. Das Verfahren ermöglicht eine hohe gestalterische Freiheit, weist jedoch die gravierenden Nachteile langer Bearbeitungszeiten und eines hohen Materialeinsatzes auf.

In der ebenfalls nicht vorveröffentlichten DE 199 09 642.2 ist ein Verkleidungsteil und ein Verfahren zu dessen Herstellung beschrieben, bei dem eine sehr dünne Zierschicht, insbesondere aus Naturstein, hergestellt wird. Dabei handelt es sich um eine Art "Gesteinsfurnier". Aus dieser dünnen Zierschicht entsteht dann durch Einlegen in eine Form und Umgießen bzw. Umspritzen mit transparenten Kunststoff das Verkleidungsteil.

Dieses Verfahren ist jedoch mit einigen Problemen behaftet, da die Zierschicht zu wenig Halt aufweist und beim Umgießen häufig in Einzelteile zerfällt. Außerdem kann sich die Zierschicht der durch die Gießform vorgegebenen Kontur nur schwer bzw. unzureichend anpassen, da die Kontur sichtseitig oberhalb der Zierschicht Raum für den Kunststoff lassen muß, wodurch es zu unterschiedlichen Kunststoff-Schichtdicken oberhalb der Zierschicht kommt, was optisch sehr nachteilig ist und dem Verkleidungsteil den Anschein eines Verzugs und einer unzureichenden Fertigungsgenauigkeit gibt.

Es ist daher Aufgabe der Erfindung, ein Verfahren zur Herstellung eines Verkleidungsteils mit einer dünnen Zierschicht und einem Trägerelement zu schaffen, wobei die Zierschicht aus einem organischen und/oder kristallinen Material, welches in dünner Schicht bruchgefährdet ist, besteht, und bei dem die dünne Zierschicht auf eine wenigstens annähernd freie, dreidimensionale geometrische Gestalt des Trägerelements aufgebracht werden kann.

Erfindungsgemäß wird die Aufgabe durch das im kennzeichnenden Teil von Anspruch 1 genannte Verfahren gelöst.

Bei dem erfindungsgemäßen Verfahren liegt einer der größten Vorteile darin, daß auf eine Oberfläche der dünnen Zierschicht ein plastischer Fixierfilm aufgebracht wird. Dieser plastische Fixierfilm besteht aus einem Kleber und einem Vlies bzw. einer Folie. Das Vlies bzw. die Folie muß dabei in der Lage sein, plastische Verformungen, z.B. ein Recken oder ein plastisches Dehnen, mitzumachen ohne einzureißen.

Die Folie bzw. das Vlies wird mit dem Kleber auf eine der Oberflächen der dünnen, furnierartigen Zierschicht aufgebracht. Als Kleber kann z.B. ein Schmelzkleber dienen, welcher herstellungsbedingt meist sowieso auf den dünnen Zierschichten, insbesondere denen aus Naturstein, aufgebracht ist. Das Vlies bzw. die Folie kann dann unter Wärmeeinwirkung auf der bereits vorhandenen Schmelzkleberschicht fixiert und von dem Kleber durchdrungen werden.

Selbstverständlich ist neben dem Einsatz von Schmelzkleber auch der Einsatz vieler anderer Klebstofftypen denkbar. So könnten insbesondere auch direkt mit dem Vlies bzw. der Folie verbundene Klebstoffschichten, also eine Art Klebeband, eingesetzt werden. Auch die Verwendung von Mehrkomponenten-Klebstoffen wäre eine weitere Möglichkeit.

Der aus dem Vlies bzw. der Folie und dem Kleber gebildete plastische Fixierfilm erlaubt es dann die dünne Zierschicht an praktisch jede vorgegebene Form anzupassen, da durch den plastischen Fixierfilm z.B. eine Natursteinschicht entlang von Kristallkanten gebrochen werden kann ohne zu zerfallen. Dies bietet den Vorteil, daß auch dreidimensional ausgeformte Oberflächenkonturen wie z.B. enge, ineinander übergehende Radien mit der dünnen Zierschicht versehen werden können.

Ein Trägerelement auf das die dünne Zierschicht aufgebracht werden soll, wird auf seiner später der Zierschicht zugewandten Seite mit einem Kleber beschichtet. Der Kleber sollte dabei einen zu der jeweiligen Zierschicht passenden Farbton aufweisen, da der Kleber die in der Zierschicht entstehenden kleinen Risse auffüllt und damit von der späteren Sichtseite aus teilweise erkennbar wird. Als Alternative dazu ist auch ein transparenter Kleber denkbar, so daß durch die Risse die dann entsprechend auszuwählende Farbe des Trägerelements durchschimmern kann.

Das Trägerelement welches gleichzeitig die Basis für das spätere Verkleidungsteil bildet, wird mit der nicht mit Kleber beschichteten Seite in eine Unterform eingelegt, um eine Verformung und einen Verzug des Trägerelements und damit des Verkleidungsteils während des Verfahrens zu vermeiden.

Die Zierschicht wird auf ihre später gewünschte Form grob zugeschnitten, mit ihrer unbeschichteten Oberfläche auf das Trägerelement aufgelegt und positioniert.

Um die Anpassung der Zierschicht mit dem plastischen Fixierfilm an die geometrische Gestalt des Trägerelements annähernd ideal zu realisieren, wird bei dem erfindungsgemäßen Verfahren ein elastisches Element auf der Zierschicht positioniert.

Dann wird auf die Zierschicht bzw. das elastische Element Druck aufgebracht, wobei sich die Zierschicht an die Form des Trägerelements anpasst und mit diesem verklebt wird. Das elastische Element hilft dabei die Zierschicht in möglichst idealer Form um enge Radien und dreidimensionale Formen zu biegen und bewirkt gleichzeitig bereits beim Positionieren und Niederdrücken der Zierschicht ein Fixieren ihrer Position auf dem Trägerelement, bevor die Zierschicht mit Druck beaufschlagt wird.

Bei dem Beaufschlagen mit Druck während des sogenannten Presskaschierens erfährt die dünne Zierschicht zwar durchaus Brüche, diese erfolgen jedoch entlang von Mikrostrukturen bzw. Kristallkanten. In Kombination mit dem an die Materialfarbe der dünnen Zierschicht angepassten Kleber, welcher die entstehenden kleinen Risse auffüllt, kann ein optischer Eindruck erreicht werden, bei dem sämtliche Eigenschaften des Materials der Zierschicht praktisch vollkommen erhalten bleiben.

Nach dem Presskaschieren weist die Zierschicht dann dauerhaft die gewünschte Oberflächenform auf. Der Verbund aus Zierschicht und Trägerelement wird aus der Unterform entnommen und die Außenkontur des Verbunds aus dem Trägerelement und der Zierschicht wird auf ihre endgültigen Abmessungen bearbeitet. Dieser Schritt ist notwendig, da die Zierschicht und das Trägerelement zum Verpressen während des Verfahrens noch Überstände aufweisen, also etwas größer ausgeführt sind, als dies für ihre endgültige Außenkontur und Größe erforderlich ist. Dadurch können z.B. verarbeitungsbedingte Probleme bezüglich der Haftung und Formhaltigkeit, die im äußersten Rand der Verkleidungsteile gelegentlich auftreten, einfach "Abgetrennt" werden.

Zum nachfolgenden Entfernen des plastischen Fixierfilms wird je nach Typ des eingesetzten Klebstoffes Wärme und/oder ein Lösungsmittel eingesetzt. Dabei ist jedoch darauf zu achten, daß der die Zierschicht mit dem Trägerelement verbindende Kleber durch die kleinen Risse in der Zierschicht nicht ebenfalls mitangelöst wird. Um das zu verhindern, könnten für den plastischen Fixierfilm und die Verbindung zwischen Zierschicht und Trägerelement beispielsweise zwei verschiedene Kleber eingesetzt werden, welche nicht auf dieselben Lösungsmittel reagieren.

In einer besonders günstigen Ausführungsform der Erfindung wird der Verbund aus Zierschicht und plastischem Fixierfilm bereits vor dem Auflegen auf das Trägerelement vorsegmentiert.

Diese Vorsegmentierung erfolgt zwischen zwei Flächen, von denen zumindest eine elastisch ausgebildet ist. Dazu kann z.B. eine elastische Grundplatte dienen, auf die die Zierschicht mit dem plastischen Fixierfilm aufgelegt und mit einer Walz überwalzt wird. Dabei wird das Material der dünnen Zierschicht an stoffbedingt vorgegebenen Kristallstrukturen oder anderen Mikrostrukturen gebrochen. Ein so vorsegmentierter Verbund aus Zierschicht und plastischem Fixierfilm läßt sich dann sehr geschmeidig um dreidimensionale Formen legen und auch an sehr enge Radien gleichmäßig anpressen.

In einer weiteren besonders vorteilhaften Ausführungsform der Erfindung wird gleichzeitig zu dem Aufbringen des Drucks thermische Energie zugeführt, so daß zumindest der plastische Fixierfilm erwärmt wird.

Dadurch ergibt sich der Vorteil, daß sich die Zierschicht mit dem plastische Fixierfilm bei weitem besser an die vorgegebenen geometrischen Formen anpressen läßt, da der plastische Fixierfilm durch die Erwärmung seines Klebers und seiner Fasern bzw. seiner Kunststoffstruktur viel geschmeidiger an vorgegebene geometrische, dreidimensionale Oberflächen anzupassen ist.

Im kennzeichnenden Teil des Anspruchs 8 ist eine weitere Verfahrensalternative beschrieben. Die hier aufgezeigte Lösung beruht auf demselben Prinzip, weist aber die Einschränkung auf zweidimensional abwickelbare, von einer Walze in ihrer Gesamtheit überwalzbare Oberflächen auf.

Das Trägerelement liegt hierbei in einer als Schiene ausgebildeten Unterform und die Zierschicht mit dem plastischen Fixierfilm wird über eine oder mehrere Walzen in mehreren oder je einem Fertigungsschritt auf die Oberfläche des Trägerelements aufgepresst. Dabei wird auf den Einsatz eines elastischen Elements, wie in den vorhergehend beschriebenen Alternativen, prinzipiell verzichtet.

Allerdings kann in einer besonders günstigen Ausführungsform des Verfahrens die wenigstens eine Walze an ihrer Oberfläche elastisch ausgebildet sein, so daß die Walze zumindest einen Teil der Aufgaben des elastischen Elements mitübernehmen kann.

Ansonsten bietet auch diese Verfahrensvariante die bereits beschriebenen Vorteile bezüglich der Anpassung der Zierschicht an die durch das Trägerelement vorgegebene Oberflächenkontur des Verkleidungsteils.

Im kennzeichnenden Teil des Anspruchs 10 ist ein weiteres Verfahren beschrieben, welches eine alternative Lösung aufzeigt, die ebenfalls auf dem gleichen bzw. einem ähnlichen Lösungsprinzip beruht und vergleichbare Vorteile wie die bereits beschriebenen Verfahren aufweist.

Bei diesem Verfahren erfolgt das Verkleben der Zierschicht und des Trägerelements über einen Kontaktkleber.

Um eine ideale Anpassung der dünnen Zierschicht an die Oberfläche zu erreichen, muß die Zierschicht mit dem plastischen Fixierfilm bei diesem Verfahren unbedingt vorsegmentiert werden, so daß dieser oben bereits beschriebene Schritt der Vorsegmentierung im Gegensatz zu den oben genannten Verfahren hier nicht als Möglichkeit zur Steigerung der Qualität, sondern als notwendiger Fertigungsschritt gesehen werden muß.

Die Vorsegmentierung ist hier unbedingt erforderlich, da durch den Kontaktkleber und damit das bei einer Berührung sofort erfolgende Haften der Zierschicht auf dem Trägerelement, ein Anpassen der Zierschicht an die Oberfläche des Trägerelements nicht mehr in dem Maße möglich ist, wie dies bei den oben beschriebenen Verfahren der Fall war.

Nach der Vorsegmentierung erfolgt ein Grobzuschnitt des Verbunds aus dem plastischen Fixierfilm und der Zierschicht und die dem plastischen Fixierfilm abgewandte Oberfläche der Zierschicht und die später der Zierschicht zugewandte Oberfläche des Trägerelements wird jeweils mit Kontaktkleber beschichtet.

Auch hier wird das Trägerelement in eine Unterform eingelegt und die beiden mit Kontaktkleber beschichteten Oberflächen werden positioniert. Erst dann werden die beiden Schichten in Kontakt zueinander gebracht. Nun kann gleichmäßig und gezielt Druck auf die Zierschicht aufgebracht werden, wobei die gesamte Oberfläche der Zierschicht zu bearbeiten ist. Die Zierschicht wird praktisch auf die Oberflächenkontur des Trägerelements aufgerieben. Der Kontaktkleber wird dabei aktiviert und verklebt die Zierschicht mit dem Trägerelement.

Auch hier ist auf eine entsprechend gewählte Farbgestaltung des Klebers und/oder des Trägerelements zu achten.

Da bei diesem Verfahrensschritt in einer besonders günstigen Ausführungsform der Erfindung thermische Energie zugeführt werden kann, läßt sich dann das Aufreiben der Zierschicht auch als eine Art "Aufbügeln" verstehen.

Dieses letzte beschriebene Herstellungsverfahren bietet sich insbesondere dann an, wenn bei Kleinserien oder Prototypen eine Herstellung der Verkleidungsteile manuell erfolgen soll.

Bei allen beschriebenen Verfahren bietet es sich in einer besonders vorteilhaften und günstigen Ausführungsform an, die sichtseitige Oberfläche der Zierschicht abschließend mit einer transparenten Schutzschicht, insbesondere wenigstens einer transparenten Lackschicht zu versehen.

Um bei allen Verfahren ideale optische Eigenschaften des Verkleidungsteils zu erreichen, bietet es sich an entweder den plastischen Fixierfilm zur Zierschicht passend einzufärben oder einen transparenten plastischen Fixierfilm einzusetzen und das darunterliegende Trägerelement in einem zu dem Material der dünnen Zierschicht passenden Farbton auszuführen.

Weitere vorteilhafte Ausgestaltungen der Herstellungsverfahren ergeben sich aus den Unteransprüchen und den nachfolgend anhand der Zeichnungen näher beschriebenen Verfahrensbeispiele.

Es zeigt:
- Fig. 1: eine Prinzipdarstellung des Aufbringens eines plastischen Fixierfilms;
- Fig. 2: eine prinzipielle Schnittdarstellung des Presskaschierens eines Verkleidungsteils mittels einer Unterform und einer Oberform;
- Fig. 3: eine prinzipielle Schnittdarstellung des Presskaschierens des Verkleidungsteils mittels einer Unterform und einer Fluidpresse;
- Fig. 4: eine prinzipielle Schnittdarstellung des Presskaschierens des Verkleidungsteils mit-tels einer Unterform und einem Vakuumpressen;
- Fig. 5: mehrere Verfahrensschritte zum Aufbringen der Zierschicht durch Walzen; und
- Fig. 6: eine Prinzipdarstellung eines Handlaminierverfahrens zur Herstellung des Verkleidungsteils.

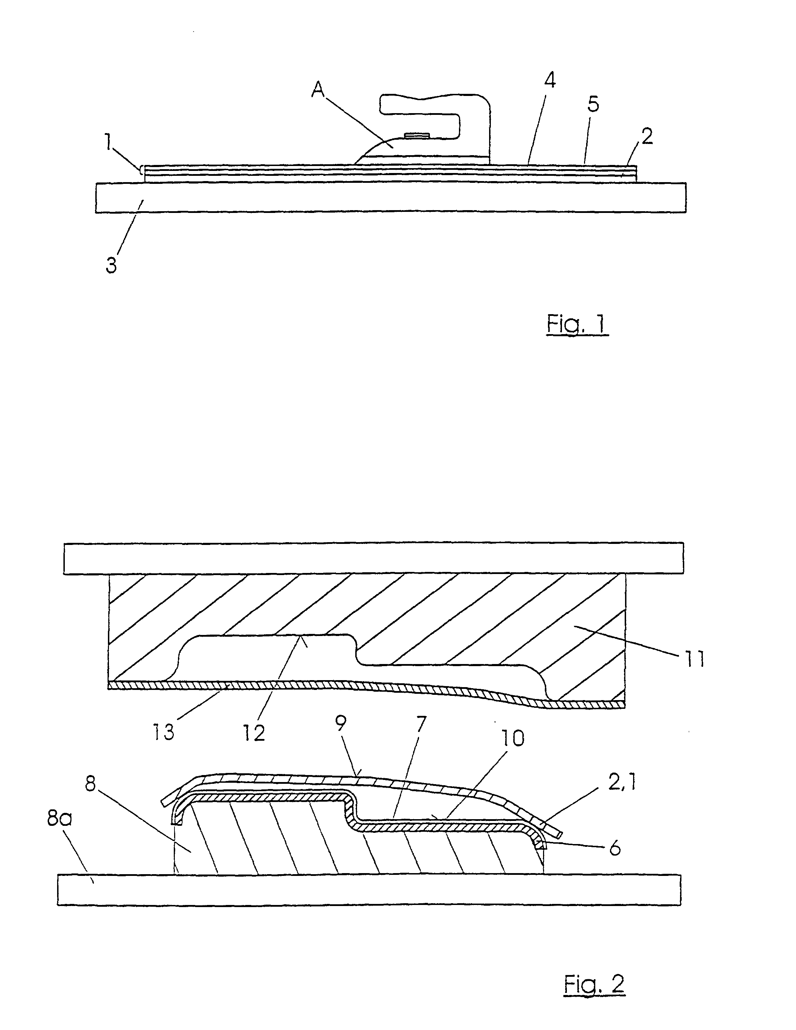

In Fig. 1 ist prinzipmäßig dargestellt wie ein plastischer Fixierfilm 1 auf eine dünne Zierschicht 2, insbesondere eine Gesteinsschicht 2, aufgebracht wird. Die Gesteinsschicht 2 liegt dabei auf einer ebenen Grundplatte 3 welche hier als Arbeitsunterlage dient.

Ein sehr einfaches und effektives Verfahren besteht darin, als plastischen Fixierfilm 1 ein Vlies 4 bzw. eine Folie 4 einzusetzen und diese mittels eines Schmelzklebers 5 auf der Gesteinsschicht 2 zu fixieren. Dieser Verfahrensschritt wird in Fig. 1 durch das Bügeleisen A prinzipmäßig angedeutet.

Um in Fig. 1 den Aufbau der Gesteinsschicht 2 mit dem plastischen Fixierfilm 1 erkennbar zu machen, wurden die Schichtstärken stark überhöht dargestellt. In der Realität weist die Gesteinsschicht 2 lediglich eine Schichtdicke von 0,1 bis maximal 1,0 mm auf, der plastische Fixierfilm 1 liegt in seiner Schichtdicke in etwa in derselben Größenordnung.

Dieses Beschichten der Gesteinsschicht 2 mit dem plastischen Fixierfilm 1 erfolgt bei allen Verfahrensvarianten als erster Schritt. Speziell bei dem Einsatz eines Schmelzklebers 5 wird dabei eine Trennschicht (nicht dargestellt) zwischen der durch das Bügeleisen A symbolisierten Wärmequelle und dem plastischen Fixierfilm 1 eingesetzt. Besonders gut eignet sich ein Papiervlies, welches gleichzeitig überschüssigen Kleber aufnehmen kann.

Vor dem, in den nachfolgenden Figuren in verschiedenen Verfahrensvarianten dargestellten, zentralen Verfahrensschritt erfolgt ein Grobzuschnitt des Verbunds aus Gesteinsschicht 2 und plastischem Fixierfilm 1 auf eine grobe Projektion der Form eines Trägerelements 6. Der Grobzuschnitt ist dabei etwas größer als das Trägerelement 6. Außerdem ist auch das Trägerelement 6 etwas größer ausgeführt, als dies seine endgültige Außenkontur bzw. Abmessung erforderlich machen würde. Diese überstehenden Bereiche werden erst nach dem zentralen Verfahrensschritt, bei dem Verbund aus dem Trägerelement 6 und der Zierschicht 2 abgetrennt. Dieses Abtrennen erfolgt meist durch ein Fräsen des Verbunds aus dem Trägerelement 6 und der Zierschicht 2 auf seine endgültige Außenkontur und Größe.

Fig. 2 versinnbildlicht den eigentlichen, zentralen Verfahrensschritt, bei dem die Gesteinsschicht 2 mit dem Trägerelement 6 verbunden wird. Diese Verbindung erfolgt durch einen Kleber 7, welcher je nach Herstellungsverfahren entweder auf dem Trägerelement 6 oder auf der dem Trägerelement 6 zugewandten Seite der Gesteinsschicht 2 aufgebracht ist. Dabei liegt auch der plastische Fixierfilm 1 je nach Verfahrensvariante zwischen dem Kleber 7 und der Gesteinsschicht 2 oder auf einer beim späteren Verkleidungsteil sichtseitigen Oberfläche 9 der Gesteinsschicht 2.

Um während des Verfahrens keine Verformungen des Trägerelements 6 zu erhalten, liegt das Trägerelement 6 in einer Unterform 8 mit einer Grundplatte 8a. Auf einer beim späteren Verkleidungsteil der Zierschicht 2 zugewandten Oberfläche 10 des Trägerelements 6 sind der Kleber 7 und die Gesteinsschicht 2 mit dem plastischen Fixierfilm 1 angebracht.

Oberhalb der späteren sichtseitigen Oberfläche 9 der Gesteinsschicht 2 ist eine Oberform 11 angeordnet. In die Oberform 11 ist eine passgenaue Negativkontur 12 des späteren Verkleidungsteils eingearbeitet. Diese Negativkontur 12 wird durch ein elastisches Element 13 z.B. ein Gummituch 13 überdeckt.

Wenn nun die Oberform 11 auf die Unterform 8 zubewegt wird, kommt zuerst das Gummituch 13 in Kontakt mit der Gesteinsschicht 2 und dem plastischen Fixierfilm 1. Beim weiteren Niederdrücken der Oberform 11 wird die Gesteinsschicht 2 durch das Gummituch 13 in einer definierten Lage zu dem Trägerelement 6 fixiert und beim Verschließen der beiden Formen 8, 11 wird die Gesteinsschicht 2 durch die Negativkontur 12 in ihre endgültige Oberflächengestalt gebracht.

Das Presskaschieren des Trägerelements 6 mit der Gesteinsschicht 2 wird überhaupt erst durch den Einsatz des plastischen Fixierfilms 1 möglich und wird durch das Gummituch 13 ideal unterstützt, da dieses hilft den Verbund aus plastischem Fixierfilm 1 und Gesteinsschicht 2 an die vorgegebenen Radien des späteren Verkleidungsteils passgenau anzupressen.

Neben dieser Niederhaltefunktion der elastischen Gummihaut 13 schützt sie auch die Negativkontur 12 in der Oberform 11 vor Verschleiß und macht bei entsprechender Materialauswahl des Gummituchs 13 das Einbringen eines Trennmittels in die Negativkontur 12 bzw. auf die Gesteinsschicht 2 mit dem plastischen Fixierfilm 1 unnötig. Außerdem gleicht das Gummituch 13 fertigungsbedingte Unterschiede in der Schichtdicke der Gesteinsschicht 2 bzw. Toleranzabweichungen des Trägerelements 6 aus.

Bei den einer weiteren Verfahrensvarianten wird das Gummituch 13 einfach über die positionierte Zierschicht 2 gelegt, bevor der Druck aufgebracht wird. Diese Vorgehensweise erlaubt ähnliche verfahrenstechnische Möglichkeiten bezüglich des Vorfixierens, Niederhaltens und Anpressens, lediglich der Verschleißschutz der Oberform 8 entfällt.

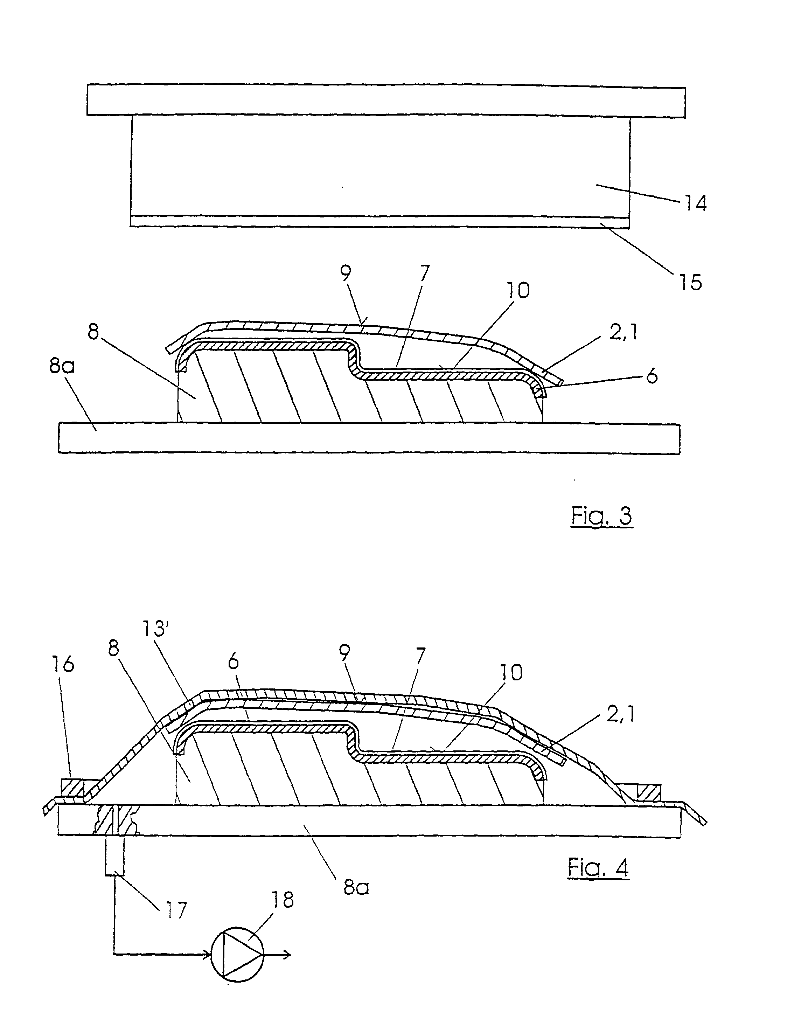

Fig. 3 zeigt eine weitere Verfahrensalternative, bei der anstatt einer Oberform 11 eine Fluidpresse 14 eingesetzt wird. Diese Fluidpresse 14 weist in ihrem Inneren eine inkompressible Flüssigkeit auf. Durch eine elastische Unterseite 15 der Fluidpresse 14 kann sie sich jeder beliebigen Kontur anpassen und durch eine Relativbewegung der Fluidpresse 14 in Richtung der Unterform 8 wird die Gesteinsschicht 2 in ihre endgültige, durch das Trägerelement 6 vorgegebene, Form gepresst. Die Aufgaben des oben beschriebenen elastischen Elements 13 werden dabei von der elastischen Unterseite 15 der Fluidpresse 14 übernommen.

Auch hier wird die Gesteinsschicht 2 durch das Presskaschieren auf das Trägerelement 6 aufgebracht, wobei der plastische Fixierfilm 1 und die elastische Unterseite 15 der Fluidpresse 14 dafür sorgen, daß die Gesteinsschicht 2 formgenau entlang der durch das Trägerelement 6 vorgegebenen geometrischen Kontur bricht und sich so der Oberfläche 10 des Trägerelements 6 ideal anpasst.

In Fig. 4 ist eine weitere alternative Ausführungsform des Verfahrens beschrieben, bei der das elastische Element 13 gasdicht, z.B. als gasdichte Gummihaut 13', ausgeführt sein muß. Über einen Befestigungs- und Dichtrahmen 16 wird die Gummihaut 13' gasdicht mit der Grundplatte 8a der Unterform 8 verbunden. Unter der Gummihaut 13' befindet sich dabei derselbe Aufbau aus Unterform 8, Trägerelement 6, Kleber 7 und Gesteinsschicht 2 mit plastischem Fixierfilm 1, wie er bereits in den vorhergehenden Ausführungsbeispielen beschrieben wurde.

Über einen Anschlußstutzen 17 wird dieser Aufbau an eine Vakuumpumpe 18 angeschlossen und der Raum zwischen der Unterform 8, der Grundplatte 8a und der Gummihaut 13' wird bestmöglichst evakuiert. Dadurch wird die Gesteinsschicht 2 von der Gummihaut 13' durch den Umgebungsluftdruck auf das Trägerelement 6 gepresst und der für die Verbindung zwischen Trägerelement 6, Kleber 7 und Gesteinsschicht 2 erforderliche Druck wird durch dieses Vakuumpressen aufgebracht.

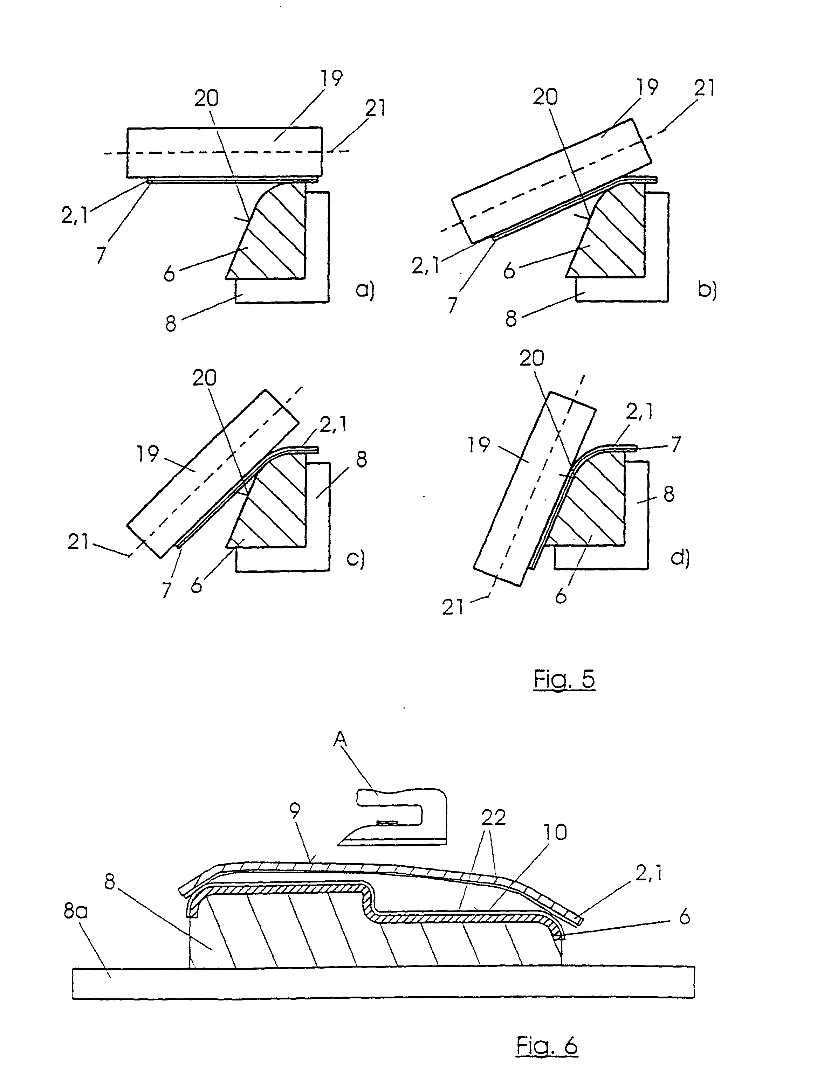

Fig. 5 zeigt eine alternative Ausführungsform welche sich jedoch ausschließlich für die Herstellung von Verkleidungsteilen eignet deren Oberflächenform zweidimensional abwickelbar ist.

Hier erfolgt das Aufpressen und Verkleben der mit Kleber 7 beschichteten Gesteinsschicht 2 mit dem plastischen Fixierfilm 1 auf das Trägerelement 6 über eine Walze 19. Alternativ dazu kann jedoch auch das Trägerelement 6 mit seiner später der Zierschicht 2 zugewandten Oberfläche 20 mit dem Kleber 7 beschichtet sein (nicht dargestellt). Während der Fertigungsschritte a) bis d) liegt das Trägerelement 6 in einer entsprechend der zweidimensional abwickelbaren Form des Trägerelements 6 als Schiene ausgebildeten Unterform 8.

Falls die Walze 19 mit einer elastischen Oberfläche ausgestattet ist, kann diese durch ihre Elastizität zumindest einen Teil der Aufgaben des elastischen Elements 13 übernehmen.

Durch ein Kippen der Walze 19 um ihre Achse 21 kann erreicht werden, daß durch mehrmaliges Überwalzen der Gesteinsschicht 2 diese an die gesamte Oberflächenkontur des Trägerelements 6 angepasst und aufgepresst wird. Dabei sind in Fig. 5 vier Fertigungsschritte a) bis d) erkennbar, die sich überwiegend durch die Lage der Achse 21 der Walze 18 und den bereits aufgebrachten Anteil der Zierschicht 2 unterscheiden.

Als Alternative dazu sind hier auch mehrere Walzen 19 denkbar, die in hintereinander geschalteten Fertigungsprozessen die dargestellten Fertigungsschritte a) bis d) ausführen.

In Fig. 6 ist ein weiteres alternatives Herstellungsverfahren prinzipmäßig dargestellt. Dieses Verfahren eignet sich besonders für die manuelle Durchführung und ist damit für Kleinserien- und Prototypenfertigung prädestiniert.

Bei diesem Verfahren wird die Gesteinsschicht 2 mit dem plastischen Fixierfilm 1 auf ihrer später dem Trägerelement zugewandten Seite mit einem Kontaktkleber 22 versehen. Die später der Gesteinsschicht 2 zugewandten Oberfläche 10 des Trägerelements 6 wird ebenfalls mit Kontaktkleber 22 beschichtet. Um das relativ weiche Trägerelement 6 während des Verfahrens nicht zu verformen, wird dieses auch hier in eine Unterform 8 eingelegt. Danach wird der Verbund aus Gesteinsschicht 2 und plastischem Fixierfilm 1 grob zugeschnitten und über dem Trägerelement 6 positioniert. Unter Einwirkung von Druck und Temperatur, in Fig. 6 durch das Bügeleisen A angedeutet, wird die Gesteinsschicht 2 mit dem Trägerelement 6 verklebt.

Bei allen Verfahrensvarianten wird nach dem Presskaschieren des Trägerelements 6 mit der Gesteinsschicht 2 die Außenkontur des Verbunds aus dem Trägerelement 6 und der Gesteinsschicht 2 auf die endgültig Form und Größe bearbeitet.

Die besten Qualitätsergebnisse lassen sich derzeit erzielen, wenn der plastische Fixierfilm 1 auf der späteren Sichtseite des Verkleidungsteiles bzw. der Gesteinsschicht 2 aufgebracht wird. Dies bedeutet, daß in einem nachfolgenden Verfahrensschritt nach dem eigentlichen Presskaschieren der plastische Fixierfilm 1 von der Gesteinsschicht 2 wieder entfernt werden muß. Dies ist jedoch durch den Einsatz von Lösungsmitteln und/oder Wärmezufuhr kein Problem.

Danach muß die sichtseitige Oberfläche 9 der Gesteinsschicht bei allen Verfahrensvarianten sowieso gereinigt werden, um diese für das abschließende Aufbringen einer transparenten Schutzschicht insbesondere einer oder mehrerer transparenten Lackschichten vorzubereiten.

Für sämtliche beschriebenen Verfahren sind prinzipiell verschiedene Klebstofftypen einsetzbar. Diese können in einem zu der Gesteinsschicht 2 passenden Farbe eingefärbt werden oder es können transparente Kleber Verwendung finden. Außer bei dem manuell durchzuführenden Verfahren, bei welchem vorzugsweise Kontaktkleber 22 eingesetzt werden, sind bei den anderen Verfahrensalternativen sämtliche bekannten Kleber denkbar. Dies könnte z.B. Schmelzkleber sein, es sind jedoch auch doppelseitige Klebebänder oder Ähnliches denkbar. Ebenso könnte ein Kleber eingesetzt werden, welcher erst in dem Verfahrensschritt in dem der Druck auf die Gesteinsschicht 2 aufgebracht wird, über Zusätze von Chemikalien oder Energie aktivierbar ist.

## Patentansprüche

1. Verfahren zur Herstellung eines Verkleidungsteils mit einer dünnen Zierschicht auf einem Trägerelement, wobei die dünne Zierschicht aus einem organischen und/oder kristallinen, in dünner Schicht bruchgefährdetem Material, insbesondere Naturstein, besteht,
**gekennzeichnet durch**
folgende Verfahrensschritte:
1.1 auf eine Oberfläche der dünnen Zierschicht (2) wird ein Kleber (5) und ein Vlies (4) oder eine Folie (4) als plastischer Fixierfilm (1) aufgebracht,
1.2 eine später der Zierschicht (2) zugewandte Oberfläche (10) des Trägerelements (6) wird mit einem Kleber (7) beschichtet,
1.3 das Trägerelement (6) wird mit der nicht mit dem Kleber (7) beschichteten Seite in eine Unterform (8) eingelegt,
1.4 die Zierschicht (2) mit dem plastischen Fixierfilm (1) wird grob zugeschnitten mit ihrer unbeschichteten Oberfläche auf die mit dem Kleber (7) beschichtete Oberfläche (10) des Trägerelements (6) aufgelegt und positioniert,
1.5 auf der Zierschicht (2) mit dem plastischen Fixierfilm (1) wird ein elastisches Element (13 bzw. 15) positioniert,
1.6 auf die der Zierschicht (2) abgewandten Seite des elastischen Elements (13 bzw. 15) wird Druck aufgebracht, wobei sich die Zierschicht (2) der Form der Oberfläche (10) des Trägerelements (6) anpasst und mit dem das Trägerelement (6) verklebt,
1.7 der Verbund aus dem Trägerelement (6) und der Zierschicht (2) wird aus der Unterform (8) entnommen und eine Außenkontur des Verbunds aus dem Trägerelement (6) und der Zierschicht (2) wird auf die endgültigen Abmessungen bearbeitet,
1.8 der plastische Fixierfilm (1) wird **durch** Einwirkung von Wärme und/oder Lösungsmittel von der Zierschicht (2) entfernt.

2. Verfahren zur Herstellung eines Verkleidungsteils nach Anspruch 1,
**dadurch gekennzeichnet, daß**
die Zierschicht (2) nach dem Aufbringen des plastischen Fixierfilms (1) eine Vorsegmentierung erfährt.

3. Verfahren zur Herstellung eines Verkleidungsteils nach Anspruch 1 oder 2,
**dadurch gekennzeichnet, daß**
gleichzeitig zu dem Aufbringen des Drucks thermische Energie zugeführt wird, so daß zumindest der plastische Fixierfilm (1) erwärmt wird.

4. Verfahren zur Herstellung eines Verkleidungsteils nach Anspruch 1, 2 oder 3,
**dadurch gekennzeichnet, daß**
das Aufbringen des Drucks durch eine Oberform (11) erfolgt.

5. Verfahren zur Herstellung eines Verkleidungsteils nach Anspruch 4,
**dadurch gekennzeichnet, daß**
das mit der Oberform (11) verbundene elastische Element (13) eine in die Oberform (11) eingearbeitete Negativkontur (12) überdeckt.

6. Verfahren zur Herstellung eines Verkleidungsteils nach Anspruch 1, 2 oder 3,
**dadurch gekennzeichnet, daß**
das Aufbringen des Drucks dadurch erreicht wird, daß das elastische Element (13) als gasdichte, elastische Haut (13') realisiert wird, wobei diese gasdicht mit der Unterform (8,8a) verbunden wird, und wobei zwischen der Unterform (8,8a) und der elastischen Haut (13') ein Unterdruck erzeugt wird.

7. Verfahren zur Herstellung eines Verkleidungsteils nach Anspruch 1, 2 oder 3,
**dadurch gekennzeichnet, daß**
das Aufbringen des Drucks durch eine Fluidpresse (14) erfolgt, wobei als elastisches Element (13 bzw. 15) eine elastische Unterseite (15) der Fluidpresse (14) genutzt wird.

8. Verfahren zur Herstellung eines Verkleidungsteils mit einer dünnen Zierschicht auf einem Trägerelement, wobei die dünne Zierschicht aus einem organischen und/oder kristallinen, in dünner Schicht bruchgefährdetem Material, insbesondere Naturstein, besteht,
**gekennzeichnet durch**
folgende Verfahrensschritte:
8.1 auf eine später dem Trägerelement (6) abgewandten Oberfläche der dünnen Zierschicht (2) wird ein Kleber (5) und ein Vlies (4) oder eine Folie (4) als plastischer Fixierfilm (1) aufgebracht und die Zierschicht (2) grob zugeschnitten,
8.2 eine später der Zierschicht (2) zugewandte zweidimensional abwickelbare Oberfläche (20) des Trägerelements (6) oder die später dem Trägerelement (6) zugewandte Oberfläche der Zierschicht (2) wird mit einem Kleber (7) beschichtet,
8.3 das Trägerelement (6) wird in eine Unterform (8) eingelegt,
8.4 die Zierschicht (2) mit dem plastischen Fixierfilm (1) wird auf dem Trägerelement (6) positioniert,
8.5 **durch** wenigstens eine Walze (19) wird in wenigstens einem Fertigungsschritt (a,b,c,d) Druck auf die Zierschicht (2) aufgebracht, wodurch die Zierschicht (2) der Form der Oberfläche (10) des Trägerelements (6) angepaßt und mit dem Trägerelement (6) verklebt wird,
8.6 eine Außenkontur des Verbunds aus dem Trägerelement (6) und der Zierschicht (2) wird auf die endgültigen Abmessungen bearbeitet,
8.7 der plastische Fixierfilm (1) wird **durch** Einwirkung von Wärme und/oder Lösungsmittel von der Zierschicht (2) entfernt.

9. Verfahren zur Herstellung eines Verkleidungsteils nach Anspruch 8,
**dadurch gekennzeichnet, daß**
die wenigstens eine Walze (19) mit einer elastischen Oberfläche realisiert wird.

10. Verfahren zur Herstellung eines Verkleidungsteils mit einer dünnen Zierschicht auf einem Trägerelement, wobei die dünne Zierschicht aus einem organischen und/oder kristallinen, in dünner Schicht bruchgefährdetem Material, insbesondere Naturstein, besteht,
**gekennzeichnet durch**
folgende Verfahrensschritte:
10.1 auf eine Oberfläche der dünnen Zierschicht (2) wird ein Kleber (5) und ein Vlies (4) oder eine Folie (4) als plastischer Fixierfilm (1) aufgebracht,
10.2 der Verbund aus Zierschicht (2) und plastischem Fixierfilm (1) wird vorsegmentiert,
10.3 die Zierschicht (2) wird grob zugeschnitten und auf die unbeschichtete Oberfläche der Zierschicht (2) wird ein Kontaktkleber (22) aufgebracht,
10.4 eine später der Zierschicht (2) zugewandte Oberfläche des Trägerelements (6) wird mit dem Kontaktkleber (22) beschichtet,
10.5 das Trägerelement (6) wird mit der nicht mit Kontaktkleber (22) beschichteten Seite in eine Unterform (8) eingelegt,
10.6 die beiden mit Kontaktkleber (22) beschichteten Oberflächen werden positioniert und in Kontakt zueinander gebracht,
10.7 auf die spätere sichtseitige Oberfläche (9) der Zierschicht (2) wird manuell Druck aufgebracht, der Verbund aus dem Trägerelement (6) und der Zierschicht (2) wird aus der Unterform (8) entnommen und eine Außenkontur des Verbunds aus dem Trägerelement (6) und der Zierschicht (2) wird auf die endgültigen Abmessungen bearbeitet,
10.8 der plastische Fixierfilm (1) wird **durch** Einwirkung von Wärme und/oder Lösungsmittel von der Zierschicht (2) entfernt.

11. Verfahren zur Herstellung eines Verkleidungsteils nach Anspruch 10,
**dadurch gekennzeichnet, daß**
der plastische Fixierfilm (1) vor der Verbindung der Zierschicht (2) mit dem Trägerelement (6) erwärmt wird.

12. Verfahren zur Herstellung eines Verkleidungsteils nach einem der Ansprüche 1 bis 11,
**dadurch gekennzeichnet, daß**
die Zierschicht (2) abschließend mit einer transparenten Schutzschicht versehen wird.

13. Verfahren zur Herstellung eines Verkleidungsteils nach Anspruch 12,
**dadurch gekennzeichnet, daß**
als transparente Schutzschicht wenigstens eine transparente Lackschicht verwendet wird.

14. Verfahren zur Herstellung eines Verkleidungsteils nach einem der Ansprüche 1 bis 13,
**dadurch gekennzeichnet, daß**
die Bearbeitung der Außenkontur des Verbunds aus dem Trägerelement (6) und der Zierschicht (2) auf die endgültigen Abmessungen durch fräsen erfolgt.

## Claims

1. A process for the manufacture of a trim component with a thin decorative layer on a carrier element, the thin decorative layer consisting of an organic and/or crystalline material which is susceptible to fracture in thin layers, in particular natural stone,
**characterised by**
the following process steps:
1.1 an adhesive (5) and a non-woven fabric (4) or film (4) are applied to
a surface of the thin decorative layer (2) as a plastic fixing film (1), 1.2 a surface (10) of the carrier element (6) which will subsequently face the decorative layer (2) is coated with an adhesive (7),
1.3 the side of the carrier element (6) not coated with adhesive (7) is placed in a lower mould (8),
1.4 the decorative layer (2) with the plastic fixing film (1) is roughly cut to size, its uncoated surface is placed and positioned on the surface (10) of the carrier element (6) coated with adhesive (7),
1.5 an elastic element (13/15) is positioned on the decorative layer (2) with the plastic fixing film (1),
1.6 pressure is applied to the side of the elastic element (13/15) facing away from the decorative layer (2), the decorative layer (2) adapting to the shape of the surface (10) of the carrier element (6) and being joined to the carrier element (6),
1.7 the composite consisting of the carrier element (6) and the decorative layer (2) is removed from the lower mould (8) and the outer contour of the composite consisting of the carrier element (6) and the decorative layer (2) is machined to the final dimensions,
1.8 the plastic fixing film (1) is removed from the decorative layer (2) under the effect of heat and/or solvents.

2. A process for the manufacture of a trim component in accordance with claim 1,
**characterised in that**
the decorative layer (2) is subject to pre-segmentation following the application of the plastic fixing film (1).

3. A process for the manufacture of a trim component in accordance with claim 1 or 2,
**characterised in that**
thermal energy is supplied simultaneously with the application of the pressure, thereby heating at least the plastic fixing film (1).

4. A process for the manufacture of a trim component in accordance with claim 1, 2 or 3,
**characterised in that**
the pressure is applied by means of an upper mould (11).

5. A process for the manufacture of a trim component in accordance with claim 4,
**characterised in that**
the elastic element (13) connected to the upper mould (11) covers a negative contour (12) incorporated into the upper mould (11).

6. A process for the manufacture of a trim component in accordance with claim 1, 2 or 3,
**characterised in that**
the application of the pressure is achieved by designing the elastic element (13) as a gas-tight, elastic skin (13') which is connected in a gas-tight manner to the lower mould (8, 8a) and then generating a vacuum between the lower mould (8, 8a) and the elastic skin (13').

7. A process for the manufacture of a trim component in accordance with claim 1, 2 or 3,
**characterised in that**
the pressure is applied by means of a fluid press (14), an elastic underside (15) of the fluid press (14) being used as the elastic element (13).

8. A process for the manufacture of a trim component with a thin decorative layer on a carrier element, the decorative layer consisting of an organic and/or crystalline material which is susceptible to fracture in thin layers, in particular natural stone,
**characterised by**
the following process steps:
8.1 an adhesive (5) and a non-woven fabric (4) or a film (4) as a plastic fixing film (1) are applied to a surface of the thin decorative layer (2) which will subsequently face away from the carrier element (6) and the decorative layer (2) is roughly cut to size,
8.2 a surface (20) of the carrier element (6) which can be developed two-dimensionally and will subsequently face the decorative layer (2) or the surface of the decorative layer (2) which will subsequently face the carrier element (6) is coated with an adhesive,
8.3 the carrier element (6) is placed in a lower mould (8),
8.4 the decorative layer (2) with the plastic fixing film (1) is positioned on the carrier element (6),
8.5 pressure is applied to the decorative layer (2) in at least one manufacturing step (a, b, c, d) by means of at least one roller (19), thereby adapting the decorative layer (2) to the shape of the surface (10) of the carrier element (6) and joining it to the carrier element (6),
8.6 an outer contour of the composite consisting of the carrier element
(6) and the decorative layer (2) is machined to the final dimensions, 8.7 the plastic fixing film is removed from the decorative layer (2) under the effect of heat and/or solvents.

9. A process for the manufacture of a trim component in accordance with claim 8,
**characterised in that**
at least one roller (19) is given an elastic surface.

10. A process for the manufacture of a trim component with a thin decorative layer on a carrier element, the decorative layer consisting of an organic and/or crystalline material which is susceptible to fracture in thin layers, in particular natural stone,
**characterised by**
the following process steps:
10.1 an adhesive (5) and a non-woven fabric (4) or a film (4) as a plastic
fixing film (1) are applied to a surface of the thin decorative layer (2), 10.2 the composite consisting of the decorative layer (2) and the plastic fixing film (1) is pre-segmented,
10.3 the decorative layer (2) is roughly cut to size and a contact adhesive
(22) is applied to the uncoated surface of the decorative layer (2), 10.4 a surface of the carrier element (6) which will subsequently face the decorative layer (2) is coated with the contact adhesive (22),
10.5 the side of the carrier element (6) not coated with contact adhesive (22) is placed in a lower mould (8),
10.6 the two surfaces coated with contact adhesive (22) are positioned and brought into contact with one another,
10.7 pressure is applied manually to the surface (9) of the decorative layer (2) which will subsequently be visible, the composite consisting of the carrier element (6) and the decorative layer (2) is removed from the lower mould (8) and an outer contour of the composite consisting of the carrier element (6) and the decorative layer (2) is machined to the final dimensions,
10.8 the plastic fixing film (1) is removed from the decorative layer under the effect of heat and/or solvents.

11. A process for the manufacture of a trim component in accordance with claim 10,
**characterised in that**
the plastic fixing film (1) is heated prior to the joining of the decorative layer (2) to the carrier element (6).

12. A process for the manufacture of a trim component in accordance with one of claims 1 to 11,
**characterised in that**
the decorative layer (2) is finally provided with a transparent protective layer.

13. A process for the manufacture of a trim component in accordance with claim 12,
**characterised in that**
at least one coat of transparent lacquer is used as the transparent protective layer.

14. A process for the manufacture of a trim component in accordance with one of claims 1 to 13,
**characterised in that**
the machining of the outer contour of the composite consisting of the carrier element (6) and the decorative layer (2) to the final dimensions is effected by means of milling.

## Revendications

1. Procédé de fabrication d'un élément de revêtement avec une couche décorative mince sur un élément de support, la couche décorative mince étant réalisée en un matériau organique et/ou cristallin, en couche mince, sujet à la rupture, notamment en pierre naturelle, **caractérisé par** les étapes de procédé suivantes :
1.1 sur une surface de la couche décorative mince (2) une colle (5) et un non-tissé (4) ou une feuille (4) en tant que film de fixation plastique sont appliqués,
1.2 une surface (10) de l'élément de support (6) ultérieurement orientée vers la couche décorative (2) est enduite d'une colle (7),
1.3 l'élément de support (6) est placé avec la surface non enduite de colle (7) dans un moule inférieur (8),
1.4 la couche décorative (2) avec le film de fixation plastique (1) grossièrement découpée est placée et positionnée avec sa surface non enduite sur la surface (10) enduite de colle (7) de l'élément de support (6),
1.5 sur la couche décorative (2) avec le film de fixation plastique (1) est positionné un élément élastique (13 ou 15),
1.6 sur la surface de l'élément élastique (13 ou 15) opposée à la couche décorative (2) une pression est appliquée, la couche décorative (2) épousant la forme de la surface (10) de l'élément de support (6) et adhère à l'élément de support (6),
1.7 l'ensemble élément de support (6) et couche décorative (2) est retiré du moule inférieur (8) et un contour extérieur de l'ensemble élément de support (6) et couche décorative (2) est usiné pour obtenir les dimensions définitives,
1.8 le film de fixation plastique (1) est retiré de la couche décorative (2) par effet de chaleur et/ou par un solvant.

2. Procédé de fabrication d'un élément de revêtement selon la revendication 1, **caractérisé en ce qu'**après l'application du film de fixation plastique (1) la couche décorative (2) subit une présegmentation.

3. Procédé de fabrication d'un élément de revêtement selon la revendication 1 ou 2, **caractérisé en ce qu'**en même temps que l'application de la pression, de l'énergie thermique est amenée de telle aorte qu'au moins le film de fixation plastique (1) est échauffé.

4. Procédé de fabrication d'un élément de revêtement selon la revendication 1, 2 ou 3, **caractérisé en ce que** l'application de la pression se fait à l'aide d'un moule supérieur (11).

5. Procédé de fabrication d'un élément de revêtement selon la revendication 4, **caractérisé en ce que** l'élément élastique (13) solidaire du moule supérieur (11) recouvre un contour négatif aménagé dans le moule supérieur (11).

6. Procédé de fabrication d'un élément de revêtement selon la revendication 1, 2 ou 3, **caractérisé en ce que** l'application de la pression est obtenue en réalisant l'élément élastique (13) sous la forme d'une peau élastique étanche au gaz (13'), cette dernière étant reliée de façon étanche au gaz au moule inférieur (8, 8a), et entre le moule inférieur (8, 8a) et la peau élastique (13') une dépression étant générée.

7. Procédé de fabrication d'un élément de revêtement selon la revendication 1, 2 ou 3, **caractérisé en ce que** l'application de la pression est effectuée à l'aide d'une presse à fluides, une surface inférieure (15) de la presse à fluides (14) étant utilisée comme élément élastique (13 ou 15).

8. Procédé de fabrication d'un élément de revêtement avec une couche décorative mince sur un élément de support, la couche décorative mince étant réalisée en un matériau organique et/ou cristallin, en couche mince, sujet à la rupture, notamment en pierre naturelle, **caractérisé par** les étapes de procédé suivantes :
8.1 sur une surface de la couche décorative mince (2) ultérieurement opposée à l'élément de support (6), une colle (5) et un non-tissé (4) ou une feuille (4) en tant que film de fixation plastique sont appliqués, et la couche décorative (2) est grossièrement découpée,
8.2 une surface déroulable bidimensionnelle (20)de l'élément de support (6) ultérieurement orientée vers la couche décorative (2) ou la surface de la couche décorative (2) ultérieurement orientée vers l'élément de support (6) est enduite d'une colle (7),
8.3 l'élément de support (6) est placé dans un moule inférieur (8).
8.4 la couche décorative (2) avec le film de fixation plastique (1) est positionnée sur l'élément de support (6),
8.5 une pression est appliquée sur la couche décorative (2) à l'aide d'au moins un rouleau (19) dans au moins une étape de fabrication (a, b, c, d), la couche décorative (2) épousant alors la forme de la surface (10) de l'élément de support (6) et adhérant à l'élément de support (6),
8.6 un contour extérieur de l'ensemble élément de support (6) et couche décorative (2) est usiné pour obtenir les dimensions définitives,
8.7 le film de fixation plastique (1) est retiré de la couche décorative (2) par effet de chaleur et/ou par un solvant.

9. Procédé de fabrication d'un élément de revêtement selon la revendication 8, **caractérisé en ce qu'**au moins un rouleau (19) est réalisé avec une surface élastique.

10. Procédé de fabrication d'un élément de revêtement avec une couche décorative mince sur un élément de support, la couche décorative mince étant réalisée en un matériau organique et/ou cristallin, en couche mince, sujet à la rupture, notamment en pierre naturelle, **caractérisé par** les étapes de procédé suivantes :
10.1 sur une surface de la couche décorative mince (2) une colle (5) et un non-tissé (4) ou une feuille (4) en tant que film de fixation élastique (1) sont appliqués,
10.2 l'ensemble couche décorative (2) et film de fixation plastique (1) est présegmenté,
10.3 la couche décorative (2) est grossièrement découpée, et sur la surface non enduite de la couche décorative (2) une colle de contact (22) est appliquée,
10.4 une surface de l'élément de support (6) ultérieurement orientée vers la couche décorative (2) est enduite de la colle de contact (22),
10.5 l'élément de support (6) est placé avec la surface non enduite de colle de contact (22) dans un moule inférieur (8),
10.6 les deux surfaces enduites de colle de contact (22) sont positionnées et mises en contact l'une avec l'autre,
10.7 sur la surface (9) ultérieurement visible de la couche décorative (2) une pression est appliquée manuellement, l'ensemble élément de support (6) et couche décorative (2) est retiré du moule inférieur, et un contour extérieur de l'ensemble élément de support (6) et couche décorative (2) est usiné pour obtenir les dimensions définitives,
10.8 le film de fixation plastique (1) est retiré de la couche décorative (2) par effet de chaleur et/ou par un solvant.

11. Procédé de fabrication d'un élément de revêtement selon la revendication 10, **caractérisé en ce que** le film de fixation plastique (1) est échauffé avant l'assemblage de la couche décorative (2) avec l'élément de support (6).

12. Procédé de fabrication d'un élément de revêtement selon l'une quelconque des revendications 1 à 11, **caractérisé en ce que** la couche décorative (2) est finalement pourvue d'une couche de protection transparente.

13. Procédé de fabrication d'un élément de revêtement selon la revendication 12, **caractérisé en ce qu'**en tant que couche de protection transparente on utilise au moins une couche de vernis transparente.

14. Procédé de fabrication d'un élément de revêtement selon l'une quelconque des revendications 1 à 13, **caractérisé en ce que** l'usinage du contour extérieur de l'ensemble élément de support (6) et couche décorative (2) est réalisé par fraisage pour obtenir les dimensions définitives.
